# EUROPÄISCHE PATENTSCHRIFT

(11) **EP 0 683 072 B1**
(45) Veröffentlichungstag und Bekanntmachung des Hinweises auf die Patenterteilung: **08.07.1998**
(21) Anmeldenummer: 95106161.3
(22) Anmeldetag: 25.04.1995
(51) Int. Cl.: B60R 21/04

(54) **Stossabsorber zur Verbesserung der Sicherheit in Fahrgastzellen von Kraftfahrzeugen**
Energy absorber for improving the safety in a vehicle passenger compartment
Absorbeur d'énergie améliorant la sécurité dans l'habitacle des véhicules

(30) Priorität: 20.05.1994 DE 4417835
(43) Veröffentlichungstag der Anmeldung: 22.11.1995
(73) Patentinhaber: LIGNOTOCK GmbH, D-36205 Sontra (DE)
(72) Erfinder: Rüsche, Heinz-Josef, D-57489 Drolshagen - Bleche (DE); Bonhoff, Norbert, D-46325 Borken (DE)
(74) Vertreter: Pfenning, Meinig & Partner

(56) Entgegenhaltungen:
- EP-A- 0 022 679
- EP-A- 0 318 640
- DE-A- 1 817 336
- DE-A- 2 061 623
- DE-A- 3 026 736
- DE-A- 4 140 706
- NL-A- 7 606 497
- US-A- 3 016 764
- US-A- 3 498 402
- PATENT ABSTRACTS OF JAPAN vol. 7, no. 141 (M-223) (1286) 21. Juni 1983 & JP-A-58 053 561 (NIHON PURASUTO K.K.) 30. März 1983

## Beschreibung

Die Erfindung bezieht sich auf Stoßabsorber gemäß dem Oberbegriff des Anspruchs 1.

An Vorschlägen und tatsächlich erfolgten Realisierungen zur Verbesserung der Sicherheit für Autofahrer in ihren Kraftfahrzeugen fehlt es im Stand der Technik nicht. In diesem Zusammenhang sind insbesondere die Entwicklung spezieller Knautschzonen, die den Frontalaufprall mindern, und versteifender Überrollbügel, die größere Überlebenschancen beim Sichüberschlagen von Fahrzeugen im Unfallgeschehen sichern, zu erwähnen.

In zunehmendem Maße gewinnt in der Kraftfahrzeugtechnik auch die Verbesserung des Seitenaufprallschutzes an Bedeutung. Versteifende Profile oder auch Rohrkonstruktionen werden unter der Außenhaut vor allem in den Türverschalungen angeordnet. Ergänzend hierzu ist es bekannt, zwischen Außenblech und Innenverkleidung Stoßabsorber in Form von Hartschaum-Formteilen einzufügen. Derartige Stoßabsorber haben den Vorteil, beim Unfallgeschehen eine Doppelfunktion zu übernehmen. Einmal tragen sie nämlich zur Aufzehrung der Stoßenergie bei, und zum anderen sollen sie die auf die Insassen des Fahrzeuges vor allem in deren Beckenbereichen auftretgenden Stoßkräfte abmildern. Um beiden Forderungen zu genügen, ist allerdings als Kraft-Weg-Charakteristik bei der Stoßabsorption ein schnelles Erreichen eines vorgegebenen Kraftaufnahmeniveaus erforderlich, wobei dieses Niveau über den Stoßweg weitgehend beibehalten werden sollte.

Im allgemeinen Maschinenbau werden gefährliche Maschinenüberlastungen durch die Verformung von hierfür speziell vorgesehenen Pralltöpfen vermieden. Die Verwendung von Pralltöpfen üblicher Bauart als Seitenaufprallschutz im Personenkraftwagen ist wegen der verhältnismäßig kurzen Stoßwege zwischen Karosserieblech und Innenverkleidung problematisch und hat bisher auch nicht entfernt nahgelegen. Unkontrolliert verformte Pralltöpfe können bereichsweise die in Kraftfahrzeugen eingesetzten Innenverkleidungselemente durchdringen, so daß schon aus diesem Grunde hiervon Abstand zu nehmen wäre. Bei einem späteren Seitenaufprall werden herkömmliche Pralltöpfe deshalb wenig Schutz bieten können, sie werden vielmehr eher zu einem Zusatzrisiko, zum Beispiel durch Splittern oder Kältebruch.

Aus diesen und anderen Gründen konzentrieren sich daher die Bemühungen zur Verbesserung des Seitenaufprallschutzes mittels einer geeigneten Kraftkopplung zwischen Karosserieblech und Innenverkleidung auf die Verwendung von Hartschaumelementen, obwohl mit diesen Elementen nur eine relativ schlechte Kraft-Weg-Charakteristik bezüglich der Stoßabsorption erzielbar ist. Im ersten Teil des zur Verfügung stehenden Stoßweges ist die Kraftaufnahme gering, und nachfolgend steigt die Kraftübertragung überproportional steil an.

Aus der DE-A-2 061 623 ist ein Fahrzeug bekannt, bei welchem an den dem Fahrgastraum des Fahrzeugs zugewandten Flächen der Armaturentafel und der Türen plastisch verformbare Deformationsglieder angeordnet sind, die durch eine Polsterung abgedeckt sind. Die Deformationsglieder bestehen vorzugsweise aus Blech und können stufenförmig abgesetzt sein.

Die DE-A-4 140 706 offenbart eine im Innenraum eines Kraftfahrzeuges angebrachte Armlehne, deren tragende Struktur mit Sollbruchlinien versehen ist, so daß bei hoher Druckkrafteinwirkung eine Verformung der Armlehne erfolgt. Die Sollbruchlinien sollen über die gesamte Länge der Armlehne verlaufen und stufenförmig zum inneren Hohlraum der Armlehne so versetzt sein, daß diese bei Druckbelastung senkrecht zu ihrer Befestigungsfläche teleskopartig zusammenschiebbar ist. Die tragende Struktur besteht aus geschäumtem Kunststoff und die Sollbruchstellen werden durch Querschnittsverminderungen erhalten. Hierdurch wird der Schervorgang sehr erleichtert, so daß die hierdurch absorbierte Stoßenergie relativ gering ist.

Die DE-A-3 026 736 zeigt ebenfalls eine hohl ausgebildete Armlehne, deren Außenwand durch Querschnittsverminderung erhaltene Sollbruchstellen aufweist. Die Armlehne besteht aus einem Kunststoff-Spritzgußteil. Auch hier ist die durch den Schervorgang bewirkte Absorption der Stoßenergie aufgrund der Querschnittsschwächung und des verwendeten Materials ungenügend.

Ausgehend von der DE-A-2 061 623 liegt der Erfindung die Aufgabe zugrunde, einen Stoßabsorber anzugeben, der eine verbesserte Kraft-Weg-Charakteristik und ein hohes Energieabsorptionsvermögen aufweist und damit eine Erhöhung der Sicherheit der Fahrzeuginsassen bewirkt.

Die Aufgabe wird erfindungsgemäß durch die im kennzeichnenden Teil des Anspruchs 1 angegebenen Merkmale gelöst. Vorteilhafte Weiterbildungen des erfindungsgemäßen Stoßabsorbers ergeben sich aus den Unteransprüchen.

Als Vorteil ergeben sich auch Variationsmöglichkeiten bei der Auswahl der Faserstoffe und eine optimale Beeinflussung der Scherkräfte durch die Wahl des Werkstoffs selbst. Die Möglichkeit einfacher Dickenvariation läßt eine zusätzliche Scherkraftbeeinflussung zu und über die Bindemittelauswahl die in großer Variationsbreite möglich ist, ist die Beeinflussung der Scherkraftcharakteristik beispielsweise durch flexibilisierende Bindemittel gegeben.

Stoßabsorber können auch in ihrer Wirkung beeinflußt und verbessert werden, wenn sie mit einem kompressiblen Werkstoff, beispielsweise einem Polymerschaum, ausgefüllt und/oder umgeben werden. Desgleichen ist es vorteilhaft möglich, mehrere Pralltöpfe abnehmender Größe ineinander anzuordnen oder mehrere Pralltöpfe parallel wirken zu lassen.

Werden Stoßabsorber aus mit Bindemittel verfestigten Faserwerkstoffen verwendet, ergibt sich der zusätzliche Vorteil, daß ein derartiger Stoßabsorber integraler Bestandteil eines gegebenenfalls mehrschalig ausgebildeten Seitenverkleidungsteils sein kann, das aus dem gleichen Faserwerkstoff besteht.

Die Kraft-Weg-Charakteristik eines derartigen Stoßabsorbers kann definierbar so beeinflußt werden, daß die einzelnen Scherkraftstufen oder -zonen näherungsweise gleichen Scherkraftbedarf aufweisen, und somit optimal den gewünschten Anforderungen entsprochen werden kann. Erreichbar ist dieses zum einen dadurch, daß der geometrische Übergang zwischen den Scherzonen derart ausgebildet ist, daß den Schervorgängen Biege- oder Faltvorgänge vorausgehen oder nachfolgen. Es ist aber durchaus auch vorteilhaft möglich, den Scherkraftbedarf der einzelnen Scherstufen dadurch zu beeinflussen, daß der Werkstoff des Pralltopfes in den einzelnen Scherstufen unterschiedliche Wanddicken besitzt oder daß die Übergangsradien zwischen den einzelnen Scherstufen und/oder die Neigungswinkel innerhalb der Scherstufen unterschiedlich ausgebildet sind.

Abgesehen davon, daß die Materialgleichheit Vorteile beim künftig an Bedeutung gewinnenden Recycling bietet, ergibt sich auch die Möglichkeit, mehrere Funktionen in einem Teil zu vereinen, beispielsweise die Stoßabsorber zur Versteifung der Innenverkleidung integral mit zu nutzen. Bei mehrschaligen Verkleidungsteilen können Funktionsbereiche einer Schale wie beispielsweise einer Kartentasche, Rücksprüngen für Armlehnen oder dergleichen als Stoßabsorber ausgebildet sein.

Die Erfindung soll nachfolgend anhand der beiliegenden Zeichnungen näher erläutert werden, die grob übersichtlich beispielhafte Ausführungsformen darstellen.

Es bedeutet:
- Fig. 1: einen schematischen Seitenschnitt durch einen pyramidenförmig gestuften erfindungsgemäßen Sicherheitsabsorber,
- Fig. 2: eine vergrößerte Darstellung des Bereiches A aus Fig. 1,
- Fig. 3: die Aufzeichnung einer gegebener Kraft-Weg-Charakteristik der vom Stoßabsorber aufgenommenen Scherkräfte, und
- Fig. 4: eine Draufsicht auf die Rückseite einer Türinnenverkleidung eines Personenkraftwagens mit der vorhandenen Formgebung entsprechenden integrierten Sicherheitsabsorber in stereometrischer Wiedergabe.

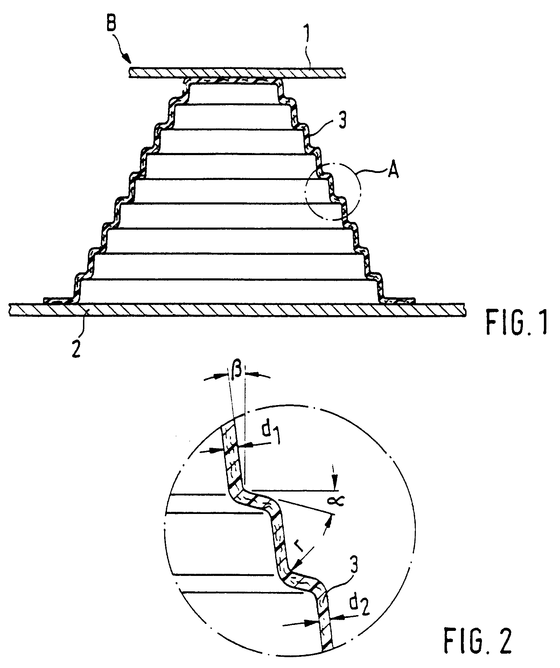

Wie Fig. 1 zeigt, ist der Stoßabsorber in Form eines Pralltopfes B ausgebildet, der im Querschnitt an eine Terrassenform erinnert bzw. eine Stufenpyramide bildet. Die einzelnen Stufen der Pyramide, deren Grundrißform beliebig sein kann, bilden Scherzonen 3, wobei der äußere Durchmesser der obersten Scherzone in etwa dem inneren Durchmesser der nachfolgenden Scherzone usw. entspricht. Die im Ausführungsbeispiel im Durchmesser kleinste Stufe des Pralltopfes, d.h. in Fig. 1 die oberste Scherzone, liegt unmittelbar am Außen- bzw. Karosserieblech 1 des Fahrzeuges an, während die unterste oder innere Scherzone mit dem größten Durchmesser an der Innenverkleidung 2 rückseitig zur Sichtseite in der Fahrgastzelle befestigt ist. Der Pralltopf B besteht aus einer Mehrzahl solcher stufig aneinandergrenzender Scherzonen 3, wobei es gleichgültig ist, ob die Scherzone mit dem größten Durchmesser an der Innenverkleidung 2 oder umgekehrt an dem Außenblech 1 liegt. Auch können sowohl am Außenblech 1 als auch an der Innenverkleidung 2 Scherzonen 3 mit jeweils großem oder jeweils kleinem Durchmesser liegen, die dann zur Mitte hin symmetrisch oder unsymmetrisch im ersten Fall in ihrem Durchmesser zunehmend und im zweiten Fall abnehmend gestaltet sind.

Der Bereich A in Fig. 1 ist in Fig. 2 vergrößert wiedergegeben. Diese Vergrößerung soll zeigen, daß zwischen den einzelnen Scherzonen 3 sowohl die Dicke bzw. Wandstärke d₁ und d₂ variieren kann als auch der Übergangsradius r von einer Scherzone zur anderen. Die einzelnen stufig aneinandergefügten Scherzonen 3 können senkrecht oder in einem Neigungswinkel β zu- bzw. aufeinanderstehen, und die Stufenplateaus zwischen aneinandergrenzenden Scherzonen 3 können in einem Stufenplateauwinkel α geneigt sein.

Sowohl die variablen Wandstärken d₁ und d₂ als auch die Neigungswinkel β, der Übergangsradius r und die Stufenplateauwinkel α lassen sich als Einflußparameter auf die aufzunehmenden Scherkräfte von Scherzone zu Scherzone verwenden, so daß über diese Größen der Gesamtverlauf des Scherverhaltens des Prallkopfes B vorgebbar ist, beginnend mit dem in Fig. 1 dargestellten Ausgangszustand bis hin zu einem zusammengeschobenen, teleskopartig die einzelnen Scherzonen 3 ineinandergefügt aufnehmenden Endzustand nach gegebenem Aufprall und entsprechender Verformung des Außenbleches 1 in Richtung auf die Innenverkleidung 2. Wachsende Wandstärken d von den Scherzonen 3 mit größerem Durchmesser zu denjenigen mit kleinerem Durchmesser hin ermöglichen, daß die Scherkräfte näherungsweise zwischen den Scherzonen gleichbleiben, obwohl die jeweilige Grundfläche der einzelnen Scherzonen mit ihrem abnehmenden Durchmesser und damit die Scherlänge jeder Stufung abnimmt. Der Radius r beeinflußt die Lage der Scherzone im Pralltopf B und entsprechend auch die Veränderung der Neigungswinkel α und β, die die Stufenfestigkeit zwischen den Scherzonen definieren.

Bei Einwirken einer Kraft senkrecht auf das Karosserieblech 1 werden die äußeren Scherzonen durch Scherkraftverformung teleskopartig ineinandergeschoben, was einer Momentaufnahme einer Stoßabsorption beim Aufprallunfall entspricht. Wenn die einzelnen Stufungen der Scherzonen im wesentlichen gleiche Höhe haben, ist im vollständig zusammengeschobenen Zustand des Pralltopfes dieser nur noch eine Scherstufung dick, wobei im wesentlichen die lichte Weite des größten Scherabschnittes vollständig von den übrigen Scherzonen ausgefüllt ist. Hierdurch kann im Gegensatz zu anderen Pralleinlagen, wie beispielsweise Schaumstoffteilen, eine vollständige Ausnutzung des ohnehin geringen Verformungsweges unter Einhaltung einer annähernd im Mittel konstanten Kraftaufnahme erzielt werden. Wenn der zuvor gemäß Fig. 1 vorgegebene Hohlraum innerhalb des Pralltopfes zusätzlich mit einem verdrängbaren Puffermaterial gefüllt ist, kann die Wirkung der Stoßabsorption des Pralltopfes zusätzlich erhöht werden.

Für die Scherkraftverformung des Pralltopfes ist es besonders vorteilhaft, daß dieser von einem Preßteil gebildet ist, welches aus organischen und/oder anorganischen Faserwerkstoffen besteht. Solche Werkstoffe können beispielsweise Lignozellulosefasern sein, die durch geeignete Bindemittel durch Wärme- und Druckbeaufschlagung zu steifen dreidimensionalen Formteilen verpreßbar sind. Die Ausfüllung des Hohlraumes des Pralltopfes kann mittels eines Polymerschaumes oder dergleichen kompressiblen Material erfolgen.

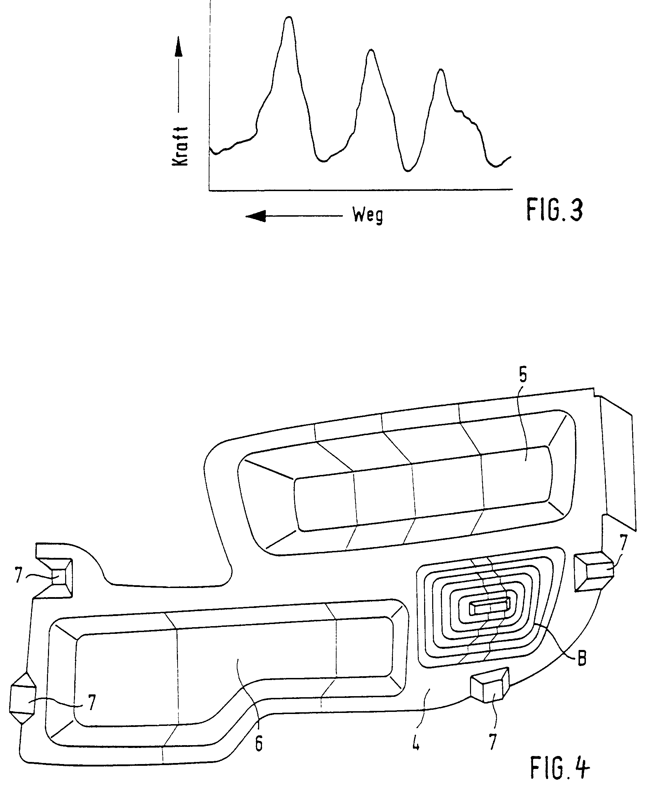

In Fig. 3 ist mittels eines Kraft-Weg-Diagramms die während eines Aufprallvorganges auftretende Belastung des Sicherheits-Stoßabsorbers für das Abscheren der ersten drei Scherzonen wiedergegeben. Wie der Darstellung zu entnehmen ist, bleibt der Anstieg der Scherkräfte von Scherzone zu Scherzone bezüglich der gegebenen Maxima relativ gering, was ein schlagartiges Zusammenbrechen der Kraftabsorption durch den Pralltopf verhindert.

Schließlich zeigt Fig 4 in einem gegebenen Ausführungsbeispiel ein Preßformteil aus mit Bindemitteln versetztem Fasermaterial für eine Seitenverkleidung der Tür eines Personenkraftwagens. Diese Türverkleidung kennzeichnet sich im wesentlichen durch eine räumlich ausgeformte Armbeuge 5 und eine entsprechend ausgeformte Kartentasche 6 sowie einen zwischen diesen im gleichen Verformungsvorgang hergestellten Pralltopf B. Im dargestellten Beispiel ist nur der Pralltopf B mit seinen Zonenstufungen als Stoßabsorber durch Scherkraftaufnahme ausgebildet. Es ist jedoch denkbar und vorteilhaft, entsprechend dem Stoßabsorber auch die Armbeuge 5 und/oder die Kartentasche 6 entsprechend als Stoßabsorber auszubilden, wofür dann die auf der Sichtseite der Türinnenverkleidung erkennbar werdende Stufung durch geeignete Kaschierung, gegebenenfalls zusätzliche Kaschierfüllstoffe, optisch geglättet werden kann. Die Anschläge 7 in der Darstellung gemäß Fig. 4 dienen der Befestigung des Innenverkleidungsteiles an der Karosserie bzw. dem Außenblech der Tür. In der in Fig. 4 angedeuteten Weise können in ein Innenverkleidungs-Formteil mehrere Pralltöpfe sowohl nebeneinander als auch ineinander angeordnet sein bzw. es kann mindestens ein derartiger Stoßabsorber integraler Bestandteil eines gegebenenfalls mehrschalig ausgebildeten Seitenverkleidungsteiles sein. Bei einem mehrschaligen Seitenverkleidungsteil läßt sich die Doppelfunktion von Kartentaschen, Armlehnen od.dgl. einerseits und deren Ausnutzung als Pralltopf andererseits besonders vorteilhaft realisieren.

## Patentansprüche

1. Stoßabsorber zur Verbesserung der Sicherheit in Fahrgastzellen von Kraftfahrzeugen zur Prallminderung zwischen dem Außenblech (1) der Karosserie und einer Innenverkleidung (2) der Fahrgastzelle in Form einer Stufenpyramide oder Terrassenanordnung,
**dadurch gekennzeichnet,**
daß die Energieabsorption überwiegend durch aufeinanderfolgende Schervorgänge erfolgt und der Werkstoff des Stoßabsorbers aus formstabil verpreßtem Faserwerkstoff besteht.

2. Vorrichtung nach Anspruch 1, dadurch gekennzeichnet, daß die einzelnen Scherzonen (3) unabhängig von ihrer Grundfläche wenigstens gleiche Stoßabsorptionseigenschaften aufweisen.

3. Vorrichtung nach Anspruch 1 oder 2, dadurch gekennzeichnet, daß für die annähernd konstante Vorgabe gleicher Scherkräfte für die einzelnen Scherzonen (3) deren Materialzusammensetzung und/oder Materialdicke und/oder Formbeschaffenheit variiert ist.

4. Vorrichtung nach Anspruch 3, dadurch gekennzeichnet, daß die Übergangsradien (r) der einzelnen zueinander gestuften Scherzonen (3) und/oder ihre Neigungswinkel (α) innerhalb der Scherstufung unterschiedlich ausgebildet sind.

5. Vorrichtung nach Anspruch 1, dadurch gekennzeichnet, daß die Stoßabsorber aus einer Mehrzahl alternierend gegeneinander versetzter oder ineinander verschachtelter Pralltöpfe (B) zusammengesetzt ist.

## Claims

1. Shock absorber for improving safety in passenger cabins of motor vehicles for the purpose of impact reduction between the exterior plate (1) of the body and an interior panel (2) of the passenger cabin in the form of a stepped pyramid or terrace arrangement, **characterised in that** energy absorption is predominantly achieved by successive shearing processes and the material of the shock absorber is a shape retainingly moulding fibre material.

2. Device according to Claim 1, **characterised in that** the individual shearing zones (3) have independently of their base surface at least equal shock absorption properties.

3. Device according to Claim 1 or 2, **characterised in that,** for the purpose of offering virtually constant shearing loads for the individual shearing zones (3), their material composition and/or material thickness and/or form characteristics is varied.

4. Device according to Claim 3, **characterised in that** the transitional radii (4) of the individual shearing zones which are stepped relative to each other and/or the inclination angle (α) within the shearing steps are of different design.

5. Device according to Claim 1, **characterised in that** the shock absorber are composed of a plurality of impact troughs (B) which are alternatingly offset relative to each other or interlaced.

## Revendications

1. Absorbeur de chocs pour améliorer la sécurité dans des habitacles de véhicules automobiles pour réduire le choc entre la tôle extérieure (1) de la carrosserie et un habillage intérieur (2) de l'habitacle, sous la forme d'une pyramide étagée ou d'un dispositif en gradins, caractérisé en ce que l'absorption d'énergie est réalisée de façon prépondérante au moyen de processus de cisaillement successifs et que le matériau de l'absorbeur de chocs est un matériau fibreux pressé de manière à avoir une forme stable.

2. Dispositif selon la revendication 1, caractérisé en ce que les différentes zones de cisaillement (3) possèdent, indépendamment de leur surface de base, des caractéristiques d'absorption des chocs au moins identiques.

3. Dispositif selon la revendication 1 ou 2, caractérisé en ce que pour la prédétermination approximativement constante de forces identiques de cisaillement pour les différentes zones de cisaillement (3), la composition du matériau et/ou l'épaisseur du matériau et/ou la configuration de ces zones est modifiée.

4. Dispositif selon la revendication 3, caractérisé en ce que les rayons de jonction (r) des différentes zones de cisaillement étagées (3) et/ou leurs angles d'inclinaison (α) sont choisis différemment à l'intérieur de l'étagement du cisaillement.

5. Dispositif selon la revendication 1, caractérisé en ce que les absorbeurs de chocs sont formés par l'assemblage d'une multiplicité de cuvettes d'impact décalées d'une manière alternée les unes par rapport aux autres ou imbriquées les unes dans les autres.
